(19) Europäisches Patentamt
European Patent Office
Office européen des brevets

(11) **EP 2 763 327 B1**

(12) **EUROPEAN PATENT SPECIFICATION**

(45) Date of publication and mention
of the grant of the patent:
**10.01.2018 Bulletin 2018/02**

(51) Int Cl.:
**H04B 7/04** *(2017.01)*    **H04B 7/0413** *(2017.01)*
**H04L 25/02** *(2006.01)*    **H04L 25/03** *(2006.01)*

(21) Application number: **13153458.8**

(22) Date of filing: **31.01.2013**

(54) **Method and device for performing lattice reduction for a receiver device receiving complex symbols via a MIMO flat fading channel**

Verfahren und Vorrichtung zum Durchführen der Gitterreduktion einer Empfängervorrichtung, die komplexe Symbole über einen flachen MIMO-Fading-Kanal empfängt

Procédé et dispositif pour réaliser une réduction de réseau sur un dispositif de réception de symboles complexes via un canal d'évanouissement plat MIMO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.08.2014   Bulletin 2014/32**

(73) Proprietors:
• **Mitsubishi Electric R&D Centre Europe B.V.**
**1119 NS  Schiphol Rijk (NL)**
Designated Contracting States:
**FR**
• **Mitsubishi Electric Corporation**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventor: **Gresset, Nicolas**
**35708 Rennes Cedex 7 (FR)**

(74) Representative: **Le Guen-Maillet**
**5, place de Newquay**
**BP 70250**
**35802 Dinard Cedex (FR)**

(56) References cited:
**EP-A2- 1 901 505     US-A1- 2012 183 088**

• **CONG LING ET AL: "Effective LLL Reduction for Lattice Decoding", INFORMATION THEORY, 2007. ISIT 2007. IEEE INTERNATIONAL SYMPOSIUM ON, IEEE, PISCATAWAY, NJ, USA, 24 June 2007 (2007-06-24), pages 196-200, XP031440718, ISBN: 978-1-4244-1397-3**

**Description**

The present invention generally relates to performing lattice reduction in a receiver device receiving complex symbols from at least one transmitter device via a multiple-input multiple-output flat fading channel.

Lattice-reduction-aided detectors have been proposed for Multiple-Input Multiple-Output (MIMO) transmission systems to give performance with full diversity like maximum likelihood receiver device yet with complexity similar to linear receiver device. Lattice reduction allows, given an integer lattice basis as input, finding another basis with short, nearly orthogonal vectors. Lattice reduction therefore allows reducing misdetection occurrences in complex symbols decoding by a MIMO receiver device.

Even though the LLL (Lenstra Lenstra Lovasz) lattice reduction allows determining a nearly-orthogonal basis within polynomial time whereas the running time of processes implementing lattice reduction is usually at least exponential in the dimension of the lattice, performing lattice reduction yet requires numerous operations, which involves a high complexity level at the MIMO receiver device.

Document XP031440718, CONG LING ET AL : "Effective LLL Reduction for Lattice Decoding", INFORMATION THEORY, 2007 - ISIT 2007 - IEEE INTERNATIONAL SYMPOSIUM ON, IEEE, PISCATAWAY, NJ, USA, 24 June 2007 (2007-06-24), pages 196-200, ISBN 978-1-4244-1397-3, discloses an embodiment of an optimized Lenstra-Lenstra-Lovasz algorithm for lattice decoding. However, even using such type of optimization, there is still a need for reducing the time and complexity needed to perform pre-processing by a MIMO receiver device in order to enable decoding received complex symbols.

Patent document US 2012/183088 A1 discloses a lattice reduction means on channel matrices corresponding to sub-carriers. To reduce complexity of lattice reduction using Lenstra-Lenstra-Lovasz algorithm, it is proposed to use the neighbouring reduction unimodular matrix T for MIMO channels in the neighbouring sub-carriers. However, even using such type of optimization, there is still a need for reducing the time and complexity needed to perform pre-processing by a MIMO receiver device in order to enable decoding received complex symbols.

It is desirable to overcome the aforementioned problems of the state of the art.

In particular, it is desirable to provide a solution that allows reducing the time needed to perform pre-processing by a MIMO receiver device in order to enable decoding received complex symbols.

More particularly, it is desirable to provide a solution that allows reducing such pre-processing time in the scope of Orthogonal Frequency Division Multiplex (OFDM) transmissions.

More particularly, it is desirable to provide a solution that allows reducing such pre-processing time when using a successive interference cancellation (SIC) receiver device.

To that end, the present invention concerns a method according to claim 1, an apparatus according to claim 9, a computer program according to claim 10 and information storage means according to claim 11. The characteristics of the invention will emerge more clearly from a reading of the following description of an example of embodiment, said description being produced with reference to the accompanying drawings, among which:

Fig. 1A schematically represents a transmitter device of a wireless communications system;
Fig. 1B schematically represents a receiver device of the wireless communications system;
Fig. 2 schematically represents an architecture of the receiver device;
Fig. 3 schematically represents a first algorithm, performed by the receiver device, for performing pre-processing in order to enable decoding complex symbols received from the transmitter device;
Fig. 4 schematically represents a second algorithm, performed by the receiver device, for performing pre-processing in order to enable decoding complex symbols received from the transmitter device;
Fig. 5A schematically represents a first algorithm, performed by the receiver device, for performing a lattice reduction;
Fig. 5B schematically represents a second algorithm, performed by the receiver device, for performing a lattice reduction;
Fig. 6 schematically represents a third algorithm, performed by the receiver device, for performing a lattice reduction;
Fig. 7 schematically represents a fourth algorithm, performed by the receiver device, for performing a lattice reduction.

The invention is detailed herein in a context of transmissions over a MIMO-OFDM channel. As will become apparent hereafter, the invention applies in a more general context of transmissions over a flat fading channel, which means that the interference between complex symbols transmitted on different time and/or frequency resources of the channel can be neglected.

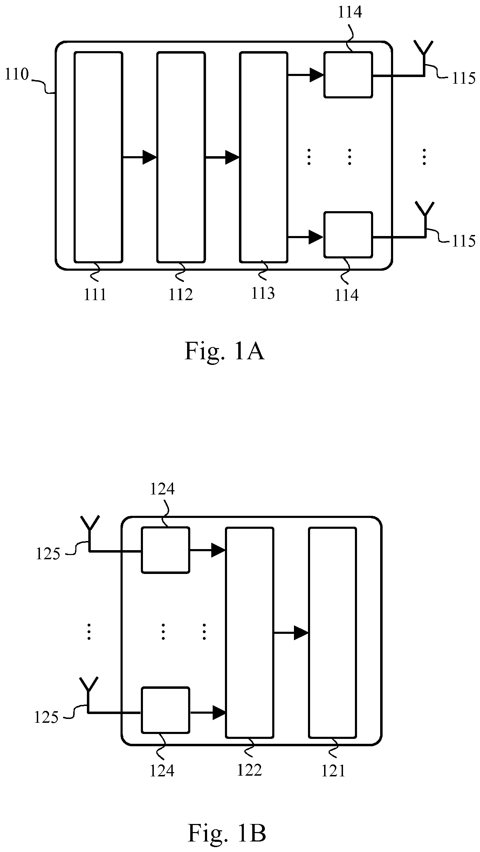

**Fig. 1A** schematically represents a transmitter device 110 of a wireless communications system. The transmitter device 110 comprises an encoding unit 111 that converts information bits into coded bits with redundancy according to an error correcting code structure, and which are possibly interleaved altogether. The transmitter device 110 further comprises a modulating unit 112 that converts sets of coded bits into complex modulation symbols according to a given spectral efficiency of a corresponding discrete modulation, such as *M*-QAM (Quadrature Amplitude Modulation) or *M*-PSK (Phase-Shift Keying). The transmitter device 110 further comprises a multiplexing unit 113 that distributes the modulation symbols at the input of a plurality of $N_t$ OFDM transmitter units 114 respectively connected to $N_t$ transmitting antennas 115.

Fig. 1A shows a transmitter device in which the $N_t$ OFDM transmitter units 114 and the respective $N_t$ transmitting antennas 115 are co-located on a same platform. In the scope of the present invention, the transmitter device 110 shown in Fig. 1A may be replaced by plural transmitter devices, each said transmitter device then comprising one modulating unit and one or more sets of OFDM transmitter and transmitting antenna. This corresponds to a Multiple Access Channel situation. It allows a single receiver device to receive signals from said plural transmitter devices. Moreover, each transmitter device may comprise plural modulating units, so that the transmitted complex symbols result from modulations with distinct spectral efficiencies.

**Fig.1B** schematically represents a receiver device 120 of the wireless communications system. The receiver device 120 comprises a decoding unit 121, a MIMO receiving unit 122, and a plurality of $N_r$ OFDM receiver units 124 respectively connected to $N_r$ receiving antennas 125, wherein $N_r \geq N_t$. The decoding unit 121 performs the inverse operations of the encoding unit 111 in order to retrieve the information bits converted by the decoding unit 121, thanks to a knowledge of the error correcting code structure.

Data transmissions via a MIMO flat fading channel formed by the $N_t$ transmitting antennas 115 and the $N_r$ receiving antennas 125 may be expressed as follows:

$$y_t = H_t\, z_t + n_t$$

wherein:

- t represents a time slot, *i.e.* a period of time during which the MIMO flat fading channel is considered stable;
- $z_t$ is a vector having a length equal to $N_t$ and representing complex symbols transmitted by the transmitter device 110 via the MIMO flat fading channel during the time slot *t*.
- $y_t$ is a vector having a length equal to $N_r$ and representing complex symbols received by the receiver device 120 via the MIMO flat fading channel during the time slot *t*, as a result of the transmission of the complex symbols $z_t$ by the transmitter device 110;
- $H_t$ is a matrix having a size of $N_r$ x $N_t$ and representing the MIMO flat fading channel between the transmitter device 110 and the receiver device 120 during the time slot t; and
- $n_t$ is a vector having a length equal to $N_r$ and representing additive noise and interference from other systems during the time slot t.

MIMO-OFDM transmissions are a MIMO flat fading channel particular embodiment. Data transmissions via a MIMO-OFDM channel formed by the $N_t$ transmitting antennas 115 and the $N_r$ receiving antennas 125 observed on one subcarrier s of the OFDM transmissions may be expressed as follows:

$$y_{t,s} = H_{t,s}\, z_{t,s} + n_{t,s}$$

wherein:

- *t* represents a time slot, *i.e.* a period of time during which the MIMO channel is considered stable;
- $z_{t,s}$ is a vector having a length equal to $N_t$ and representing complex symbols transmitted by the transmitter device 110 via the subcarrier s during the time slot t.
- $y_{t,s}$ is a vector having a length equal to $N_r$ and representing complex symbols received by the receiver device 120 via the subcarrier *s* during the time slot *t*, as a result of the transmission of the complex symbols $z_{t,s}$ by the transmitter device 110;
- $H_{t,s}$ is a matrix having a size of $N_r$ x $N_t$ and representing the MIMO channel between the transmitter device 110 and the receiver device 120 for the subcarrier *s* during the time slot *t*; and
- $n_{t,s}$ is a vector having a length equal to $N_r$ and representing additive noise and interference from other systems.

The $N_r$ x $N_t$ MIMO channel matrix $H_{t,s}$ typically has complex independent identically distributed Gaussian entries in the context of the so-called spatial division multiplexing scheme presented above and used over a wireless channel. It must be noted that the invention is not limited to such spatial multiplexing transmissions and can be implemented in any system transmitting symbols on linear channels that can be described by the equation above. For example, the channel matrix $H_{t,s}$ can be the result of a transmission of precoded symbols via plural transmitting antennas and time slots, such as for space-time coding with the Golden code that transmits four symbols via two transmitting antennas during two time slots. In this case, the number of input of the equivalent MIMO channel is $N_t=4$ and the number of output is $2 \times N_r$.

Also, the invention can be used for other types of transmissions than wireless transmissions. For example, it can be used for optical transmissions where a polarization multiplexing can be applied, especially when an OFDM modulation is implemented. In this case, the number of inputs of the equivalent MIMO channel is "2", and the number of outputs is "2". This can be extended to a higher number of dimensions for example by using multi-mode fibers. The invention also brings a high advantage in the domain of optical transmissions, since it results in a low complexity receiver with high performance, which is particularly suitable for reaching the very high data rates of optical communications.

It should be noticed that the couple (*t*,*s*) identifies a time and frequency resource, *i.e.* the use of the subcarrier s during the time slot t.

Considering that the MIMO receiving unit 122 performs a lattice reduction, the matrix $H_{t,s}$ may be expressed as follows:

$$ H_{t,s} = R_{t,s}\, T_{t,s} $$

wherein:

- $R_{t,s}$ is a reduced version of the matrix $H_{t,s}$; and
- $T_{t,s}$ is a basis change matrix for the lattice generated by the channel matrix $H_{t,s}$, with Gaussian integer entries, *i.e.* both real and imaginary parts being integers.

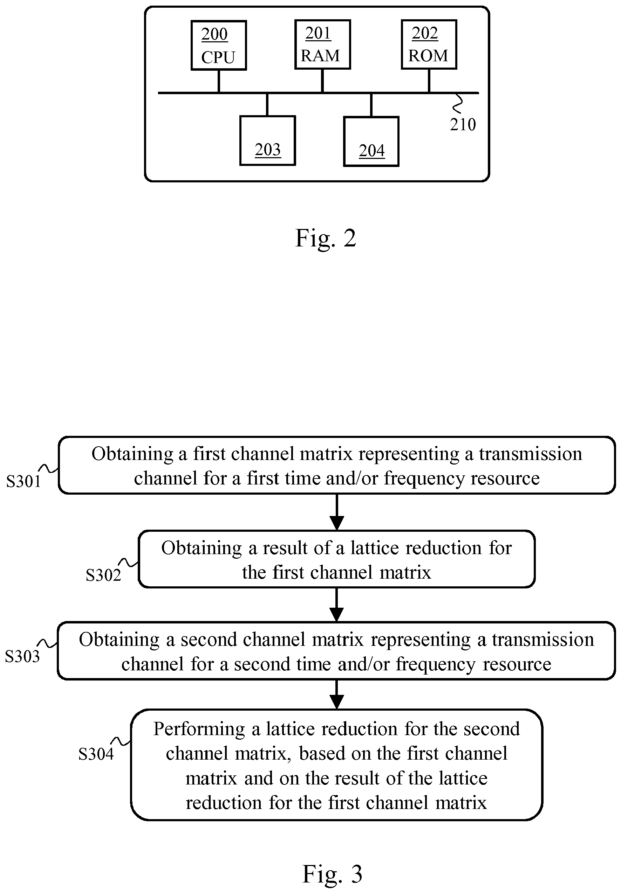

**Fig. 2** schematically represents an architecture of the receiver device 120. According to the shown architecture, the receiver device 120 comprises the following components interconnected by a communications bus 210: a processor, microprocessor, microcontroller or CPU (*Central Processing Unit*) 200; a RAM (*Random-Access Memory*) 201; a ROM (*Read-Only Memory*) 202; an HDD (*Hard-Disk* Drive) 203, or any other device adapted to read information stored by storage means; and a communication interface 204.

The communication interface 204 allows the receiver device 120 to receive signals from the transmitter device 110 via the MIMO channel.

The transmitter device 100 may be based on a similar architecture.

CPU 200 is capable of executing instructions loaded into RAM 201 from ROM 202 or from an external memory, such as an SD card or the HDD. After the receiver device 120 has been powered on, CPU 200 is capable of reading instructions from RAM 201 and executing these instructions. The instructions form one computer program that causes CPU 200 to perform the steps performed by the gateway device 110 in the algorithms described hereafter.

Any and all steps of the algorithms described hereafter may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

**Fig. 3** schematically represents a first algorithm, performed by the receiver device 120, for performing pre-processing in order to enable decoding complex symbols received from the transmitter device 110.

In a step S301, the receiver device 120 obtains a first channel matrix $H_{t,s}$ representing a MIMO transmission channel between the transmitter device 110 and the receiver device 120 for a first time and/or frequency resource.

In a step S302, the receiver device 120 obtains a result of a lattice reduction for the first channel matrix $H_{t,s}$. The lattice reduction with regard to the step S302 is for instance performed using an implementation of lattice reduction process leading to an LLL-reduced, Minkowski-reduced, or KZ (Korkine Zolotareff)-reduced lattice. For example, the LLL reduction provides an LLL-reduced lattice, the Lagrange algorithm also called Minkowski reduction provides a Minkowski-reduced lattice, and the KZ reduction provides a KZ-reduced lattice.

In a step S303, the receiver device 120 obtains a second channel matrix $H_{t',s}$ or $H_{t,s'}$ or $H_{t',s'}$ representing a MIMO transmission channel between the transmitter device 110 and the receiver device 120 for a second time and/or frequency resource, wherein t' is another time slot than t and s' is another subcarrier than s.

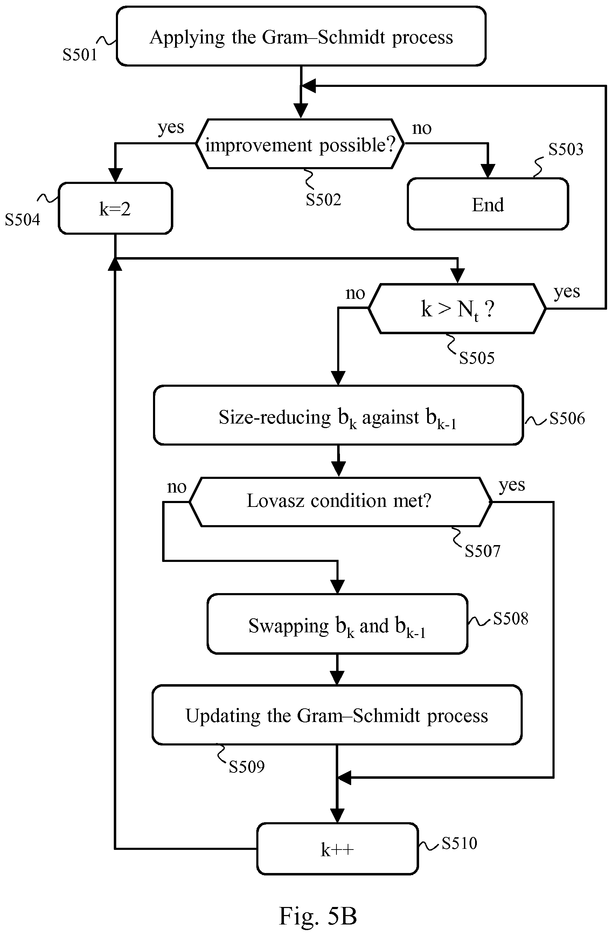

In a step S304, the receiver device 120 performs a lattice reduction for the second channel matrix $H_{t',s}$ or $H_{t,s'}$ or $H_{t',s'}$ on the basis of the second channel matrix $H_{t',s}$ or $H_{t,s'}$ or $H_{t',s'}$, of the first channel matrix $H_{t,s}$ and of the result of the lattice reduction performed in the step S302 for the first channel matrix $H_{t,s}$. The lattice reduction with regard to the step S304 is for instance performed using an implementation of a lattice reduction process leading to an LLL-reduced, Minkowski-reduced, or KZ-reduced lattice. In variants, the lattice reduction with regard to the step S304 is performed as detailed hereafter with regard to Fig. 5B, 6 or 7.

In one embodiment, when the lattice reduction of the step S302 is performed for another frequency resource, the result of the lattice reduction is expressed as follows:

$$R_{t,s} = LR\left(H_{t,s}\, T_{t,s-1}^{\ -1}\right) \text{ with } T_{t,s-1}^{\ -1} = \left(H_{t,s-1}^{\ *}\, H_{t,s-1}\right)^{-1} H_{t,s-1}^{\ *}\, R_{t,s-1}$$

wherein $A^*$ is the transpose complex conjugate of $A$, wherein LR represents the operation of lattice reduction and wherein s represents the next subcarrier in sequence compared to the subcarrier s - 1. The matrix product $H_{t,s}\, T_{t,s-1}^{-1}$ is therefore input to the lattice reduction process LR. Thus, as the MIMO channel is expected to slightly vary from one subcarrier to another in the same time slot, the lattice reduction performed for one subcarrier can be used as a starting point for the lattice reduction performed for another subcarrier.

In one embodiment, when the lattice reduction of the step S302 is performed for the same frequency resource but for another time slot, the result of the lattice reduction is expressed as follows:

$$R_{t,s} = LR\left(H_{t,s}\, T_{t-1,s}^{\ -1}\right) \text{ with } T_{t-1,s}^{\ -1} = \left(H_{t-1,s}^{\ *}\, H_{t-1,s}\right)^{-1} H_{t-1,s}^{\ *}\, R_{t-1,s}$$

wherein t represents the next time slot in sequence compared to the time slot t. The matrix product $H_{t,s}\, T_{t-1,s}^{-1}$ is therefore input to the lattice reduction process LR. Thus, as the MIMO channel is expected to slightly vary from one time slot to another for the same subcarrier, the lattice reduction performed for one subcarrier in one time slot can be used as a starting point for the lattice reduction performed for the same subcarrier in another time slot.

In one embodiment, when the lattice reduction of the step S302 is performed for another frequency resource and for another time slot, the result of the lattice reduction is expressed as follows:

$$R_{t,s} = LR\left(H_{t,s}\, T_{t-1,s-1}^{\ -1}\right)$$

with

$$T_{t-1,s-1}^{\ -1} = \left(H_{t-1,s-1}^{\ *}\, H_{t-1,s-1}\right)^{-1} H_{t-1,s-1}^{\ *}\, R_{t-1,s-1}$$

The matrix product $H_{t,s}\, T_{t-1,s-1}^{-1}$ is therefore input to the lattice reduction process LR. Thus, as the MIMO channel is expected to slightly vary from one time slot to another and from one subcarrier to another, the lattice reduction performed for one subcarrier in one time slot can be used as a starting point for the lattice reduction performed for another subcarrier in another time slot.

From a more general standpoint, the result of the lattice reduction is expressed as follows:

$$H_2 T_1^{\ -1} \text{ with } T_1^{\ -1} = \left(H_1^{\ *}\, H_1\right)^{-1} H_1^{\ *}\, R_1$$

wherein $H_1$ denotes a first channel matrix representing the MIMO flat fading channel between the (at least one) transmitter device 110 and the receiver device 120 for a first time and/or frequency resource, $H_2$ represents a second channel matrix representing the MIMO flat fading channel between the (at least one) transmitter device 110 and the receiver device 120 for a second time and/or frequency resource, $H_1^*$ represents the transpose complex conjugate of $H_1$ and $R_1$ represents the result of a lattice reduction performed on the first channel matrix $H_1$.

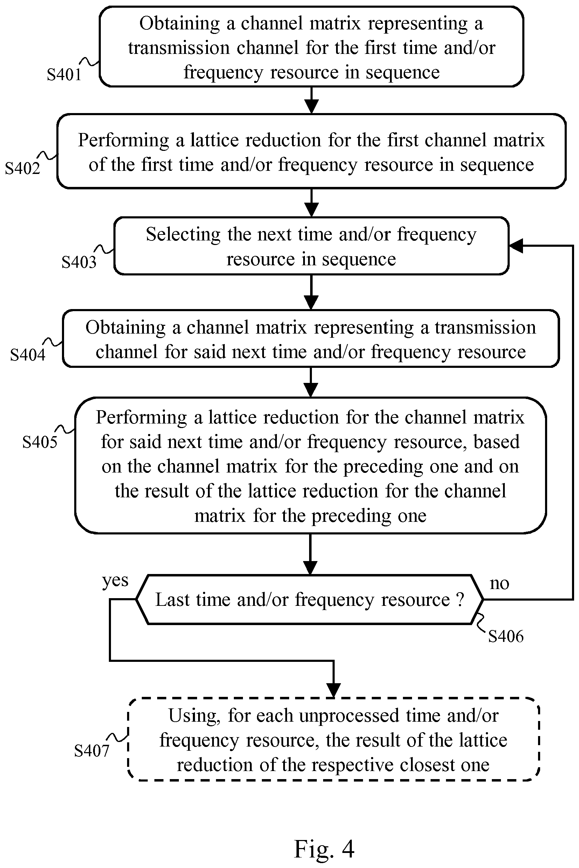

**Fig. 4** schematically represents a second algorithm, performed by the receiver device 120, for performing pre-processing in order to enable decoding complex symbols received from the transmitter device 110. The algorithm of Fig. 4 considers a sequence of plural time and/or frequency resources.

In a step S401, the receiver device 120 obtains a channel matrix $H_{t,s}$ representing a MIMO transmission channel between the transmitter device 110 and the receiver device 120 for the first time and/or frequency resource in sequence.

In a step S402, the receiver device 120 obtains a result of a lattice reduction for the channel matrix $H_{t,s}$. The lattice reduction with regard to the step S402 is for instance performed using an implementation of the LLL lattice reduction, of the Minkowski lattice reduction or of the KZ lattice reduction.

In a step S403, the receiver device 120 selects the next time and/or frequency resource in sequence.

In a step S404, the receiver device 120 obtains a channel matrix $H_{t+1,s}$ or $H_{t+1,s+1}$ or $H_{t+1,s+1}$ representing a MIMO transmission channel between the transmitter device 110 and the receiver device 120 for said next time and/or frequency resource in sequence, wherein $t + 1$ represents the next time slot in sequence compared to the time slot $t$ and $s + 1$ represents the next subcarrier in sequence compared to the subcarrier s.

In a step S405, the receiver device 120 performs a lattice reduction for the channel matrix $H_{t+1,s}$ or $H_{t+1,s+1}$ or $H_{t+1,s+1}$ on the basis of the channel matrix $H_{t,s}$, of the channel matrix $H_{t+1,s}$ or $H_{t+1,s+1}$ or $H_{t+1,s+1}$ and of the result of the lattice reduction performed in the step S402 for the channel matrix $H_{t,s}$. Therefore, the receiver device 120 performs the lattice reduction in the step S405, on the basis of the channel matrix obtained in the step S404 and of the result of a lattice reduction performed for a channel matrix representing the MIMO channel for a preceding time and/or frequency resource in sequence. The lattice reduction with regard to the step S405 is for instance performed using an implementation of the LLL reduction, of the Minkowski reduction or of the KZ reduction. In variants, the lattice reduction with regard to the step S405 is performed as detailed hereafter with regard to Fig. 5B, 6 or 7.

In a step S406, the receiver device 120 checks whether the time and/or frequency resource selected in the step S403 is the last one in sequence. If the time and/or frequency resource selected in the step S403 is the last one in sequence, a step S407 is optionally performed; otherwise, the step S403 is repeated.

In the step S407, the receiver device 120 uses, for each unprocessed time and/or frequency resource, the result of the lattice reduction performed for the closest time and/or frequency resource. A rule can define which time and/or frequency resource is the closest from a given time and/or frequency resource when plural time and/or frequency resources seem equidistant from said given time and/or frequency resource.

Let's take an example. It is considered that a time and frequency resource represented by the couple $(t,s)$ is closer to the time and frequency resource represented by the couple $(t,s - 1)$ than the time and frequency resource represented by the couple $(t,s + 1)$. It is further considered that a time and frequency resource represented by the couple $(t,s)$ is closer to the time and frequency resource represented by the couple $(t - 1,s)$ than the time and frequency resource represented by the couple $(t + 1,s)$. It is further considered that a time and frequency resource represented by the couple $(t,s)$ is closer to the time and frequency resource represented by the couple $(t - 1,s)$ than the time and frequency resource represented by the couple $(t,s - 1)$.

Other rules may be alternatively or complementarily set in order to define what time and/or frequency resource is the closest from said given time and/or frequency resource.

Therefore, the principle detailed with regard to Fig. 3 of performing, for one time and/or frequency resource, a lattice reduction on the basis of the result of a lattice reduction performed for another time and/or frequency resource, may be applied for only a subpart of the time and/or frequency resources. For time and/or frequency resources for which no lattice reduction is performed, the result of the lattice reduction performed for other time and/or frequency resources is used instead.

The step S407 is said optional in that the step S407 is not performed when a lattice reduction is performed or a result of a lattice reduction is obtained for all time and/or frequency resources. Otherwise, the step S407 is performed.

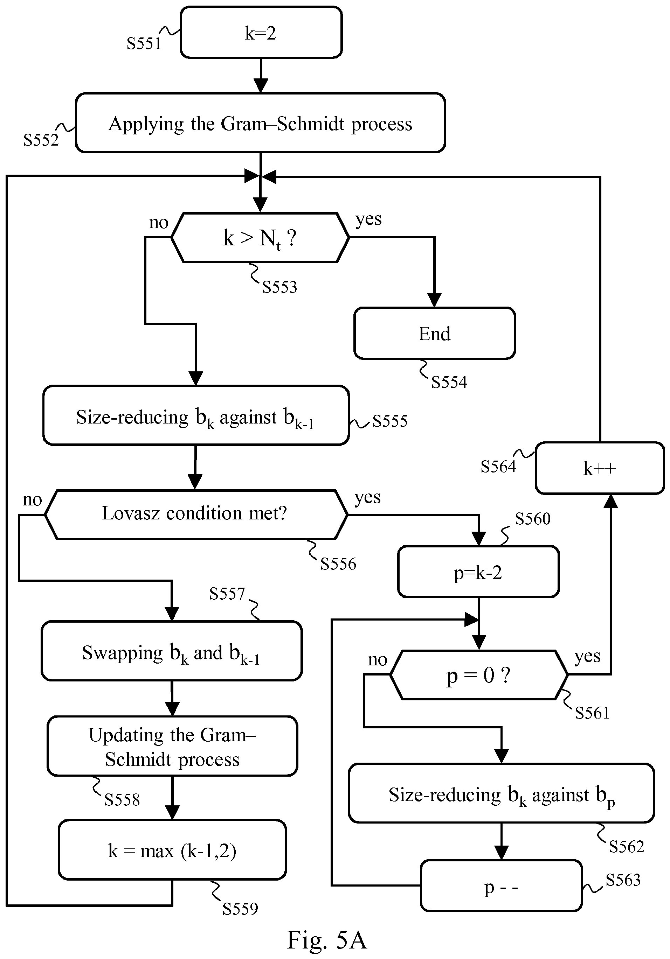

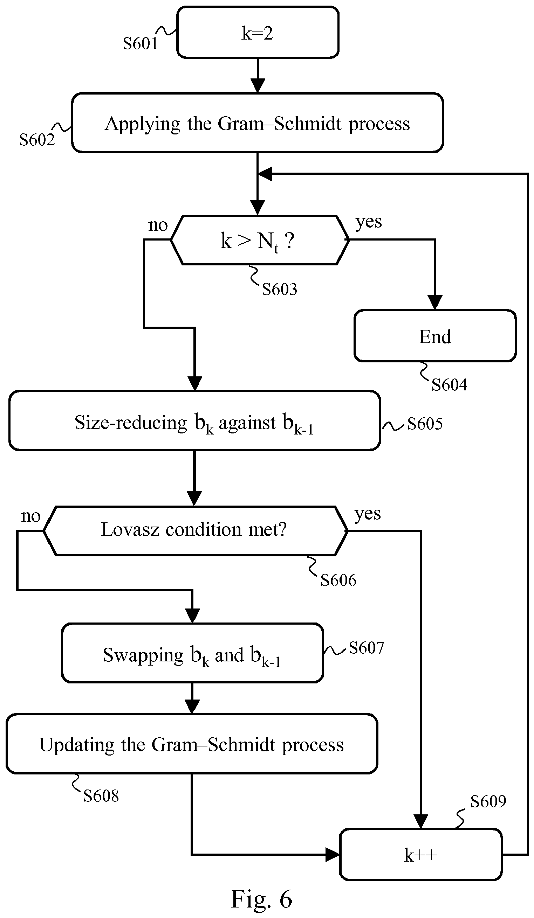

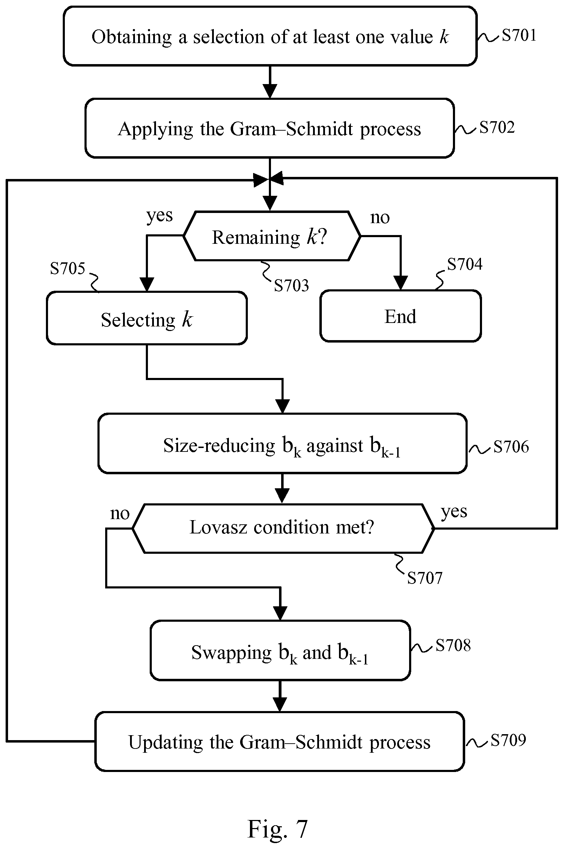

As already mentioned, lattice reductions with regard to the steps S304 and S405 can be performed using a typical implementation of the LLL lattice reduction, of the Minkowski lattice reduction or of the KZ lattice reduction. In variants, the lattice reduction with regard to the step S304 is performed as detailed hereafter with regard to Fig. 6 or 7, which schematically represent algorithms for performing a lattice reduction in a simplified manner compared to the LLL lattice reduction. It is reminded that the LLL lattice reduction, as detailed hereafter with regard to Fig. 5A, is considered successful when the following constraints are met:

$$\left|\mathcal{R}\left(\mu_{i,j}\right)\right| \leq 1/2 \text{ and } \left|\mathcal{I}\left(\mu_{i,j}\right)\right| \leq 1/2 \qquad \text{for } 1 \leq j < i \leq N_t$$

$$\left\|\hat{b}_i\right\|^2 \geq \left(\delta - \left|\mu_{i,i-1}\right|^2\right) \left\|\hat{b}_{i-1}\right\|^2 \qquad \text{for } 1 < i \leq N_t$$

wherein $\frac{1}{2} < \delta \leq 1$, $\delta$ being a factor allowing finding a trade-off between complexity of the lattice reduction in terms of number of operations and performance of the lattice reduction. Indeed, when $\delta$ is set close to its lower limit, the LLL lattice reduction converges rapidly, but the performance gain for the decoding process is limited; and, when $\delta$ is set close to its upper limit, the LLL lattice reduction requires numerous size-reduction and swapping operations to converge, but the performance gain for the decoding process is high.

**Fig. 5A** schematically represents a first algorithm, performed by the receiver device 120, for performing the lattice reduction. The algorithm of Fig. 5A shows an implementation of the LLL lattice reduction.

In a step S551, the receiver device 120 initialises a parameter $k$ with the value "2".

In a step S552, the receiver device 120 applies the Gram-Schmidt orthogonalization process to a matrix $B = [b_1,..,b_n]$ provided as input to the algorithm of Fig. 5A.

Applying the Gram-Schmidt orthogonalization process to the matrix $B$, wherein $n = N_t$, leads in defining a matrix $B = [\hat{b}_1,..,\hat{b}_n]$ and a lower triangular matrix $\mu$ with unit diagonal elements such that:

$$B = \hat{B}\mu^T$$

wherein $A^T$ is the transpose of $A$.

The matrix $\hat{B}$ and the matrix $\mu$ are thus such that:

$$\begin{cases} \hat{b}_i = b_i - \sum_{j=0}^{i-1} \mu_{i,j}\,\hat{b}_j \\ \mu_{i,j} = \hat{b}_j^{*}\,b_i\,/\,\left\|\hat{b}_j\right\|^2 \end{cases}$$

wherein $1 \le i \le N_t$.

In a step S553, the receiver device 120 checks whether the parameter $k$ is greater than $N_t$, which is the quantity of the transmitting antennas 115. When the parameter $k$ is greater than $N_t$, the algorithm ends in a step S554; otherwise, a step S555 is performed.

In the step S555, the receiver device 120 size-reduces the column $b_k$ against the column $b_{k-1}$ of the matrix $B$.

To size-reduce the column $b_k$ against the column $b_{k-1}$, the receiver device 120 firstly checks whether the absolute value of the imaginary part of $\mu_{k,k-1}$ is greater than or equal to "1/2", or whether the absolute value of the real part of $\mu_{k,k-1}$ is greater than or equal to "1/2". When the absolute value of the imaginary part of $\mu_{k,k-1}$ is greater than or equal to "1/2", or the absolute value of the real part of $\mu_{k,k-1}$ is greater than or equal to "1/2", then the receiver device 120 updates the column $b_k$ as follows:

$$b_k - \left\lceil \mu_{k,k-1} \right\rfloor b_{k-1} \Rightarrow b_k$$

and then updates the matrix $\mu$ of the Gram-Schmidt orthogonalization as follows:

$$\mu_{k,j} - \left\lceil \mu_{k,k-1} \right\rfloor \mu_{k-1,j} \Rightarrow \mu_{k,j}$$

wherein $\lceil a \rfloor$ is the nearest integer of $a$. and wherein $0 < j < k$.

In a step S556, the receiver device 120 checks whether a constraint on the norm of the basis vectors is met. In the scope of the LLL lattice reduction, this constraint is called the Lovasz condition. In other words, the receiver device 120 checks whether the following equation is fulfilled:

$$\left\|\hat{b}_k + \mu_{k,k-1}\hat{b}_{k-1}\right\|^2 \ge \delta\left\|\hat{b}_{k-1}\right\|^2$$

When the Lovasz condition is met, a step S560 is performed; otherwise, a step S557 is performed.

In the step S557, the receiver device 120 swaps the columns $b_k$ and $b_{k-1}$ and therefore modifies the matrix $B$.

In a step S558, the receiver device 120 updates the result of the Gram-Schmidt orthogonalization process according to the modified matrix $B$.

In the step S559, the receiver device 120 updates the parameter $k$ as follows, and then the step S553 is repeated:

$$max(k-1,2) \Rightarrow k$$

In the step S560, the receiver device 120 initialises a parameter $p$ with the value $k$ - 2.

In a step S561, the receiver device 120 checks whether the parameter $p$ equals the value "0". When the parameter $p$ equals the value "0", a step S564 is performed; otherwise, a step S562 is performed.

In the step S562, the receiver device 120 size-reduces the column $b_k$ against the column $b_p$ of the matrix $B$.

To size-reduce the column $b_k$ against the column $b_p$, the receiver device 120 firstly checks whether the absolute value of the imaginary part of $\mu_{k,p}$ is greater than or equal to "1/2", or whether the absolute value of the real part of $\mu_{k,p}$ is greater than or equal to "1/2". When the absolute value of the imaginary part of $\mu_{k,p}$ is greater than or equal to "1/2", or the absolute value of the real part of $\mu_{k,p}$ is greater than or equal to "1/2", then the receiver device 120 updates the column $b_k$ as follows:

$$b_k - \left\lceil \mu_{k,p} \right\rfloor b_p \Rightarrow b_k$$

and then updates the matrix $\mu$ of the Gram-Schmidt orthogonalization as follows:

$$\mu_{k,j} - \lceil \mu_{k,p} \rfloor \mu_{p,j} \Rightarrow \mu_{k,j}$$

wherein $\lceil a \rfloor$ is the nearest integer of $a$. and wherein $0 < j < k$.

In a step S563, the receiver device 120 decrements the parameter $p$ by one unit, and the step S560 is then repeated.

In the step S564, the receiver device 120 increments the parameter $k$ by one unit, and the step S553 is then repeated.

Therefore, by implementing the algorithm of Fig. 5A, the LLL lattice reduction is performed. As, according to the step S304 or S405, a basis that depends on the result of a lattice reduction for another time and/or frequency resource is input in the algorithm of Fig. 5A, the pre-processing performed by the receiver device 120 terminates in a shorter time period compared to performing the LLL lattice reduction from scratch.

**Fig. 5B** schematically represents a second algorithm, performed by the receiver device 120, for performing the lattice reduction. The algorithm of Fig. 5B shows an implementation of a suboptimal LLL lattice reduction, which is called *effective LLL lattice reduction.*

In a step S501, the receiver device 120 applies the Gram-Schmidt orthogonalization process to a matrix $B = [b_1,..,b_n]$ provided as input to the algorithm of Fig. 5B. Applying the Gram-Schmidt orthogonalization process to the matrix $B$, wherein $n = N_t$, leads in defining the aforementioned matrix $\hat{B} = [\hat{b}_1,..,\hat{b}_n]$ and the aforementioned lower triangular matrix $\mu$ with unit diagonal elements.

In a step S502, the receiver device 120 checks whether any improvement is possible to further reduce the lattice. No more improvement is considered possible when the Lovasz condition is met, for $1 < i \leq N_t$:

$$\left\| \hat{b}_i \right\|^2 \geq \left( \delta - \left| \mu_{i,i-1} \right|^2 \right) \left\| \hat{b}_{i-1} \right\|^2$$

Thus, the algorithm runs when no swap, as performed in a step S508 detailed hereafter, has been done in the previous iteration. To detect whether no swap has been done, the receiver device 120 may use a dedicated flag. This flag is set to TRUE in the step S501, set to FALSE in a step S504 (detailed hereafter) and set to TRUE in a step S508 (detailed hereafter). In the step S502, the receiver device 120 checks whether this flag is set to TRUE. If this flag is set to TRUE, at least one swap has been done in the previous iteration and then considers that an improvement in the lattice reduction is still possible; otherwise, the receiver device considers that no swap has been done and then considers that an improvement in the lattice reduction is not possible.

When an improvement (a swap) is still possible, the step S504 is performed; otherwise, the algorithm ends in a step S503.

In the step S504, the receiver device 120 initialises a parameter $k$ with the value "2".

In a step S505, the receiver device 120 checks whether the parameter $k$ is greater than $N_t$, which is the quantity of the transmitting antennas 115. When the parameter $k$ is greater than $N_t$, the step S502 is repeated; otherwise, a step S506 is performed.

In the step S506, the receiver device 120 size-reduces the column $b_k$ against the column $b_{k-1}$ of the matrix $B$. To size-reduce the column $b_k$ against the column $b_{k-1}$, the receiver device 120 proceeds as already detailed with regard to Fig. 5A.

In a step S507, the receiver device 120 checks whether the Lovasz condition is met.

When the Lovasz condition is met, a step S510 is performed; otherwise, the step S508 is performed.

In the step S508, the receiver device 120 swaps the columns $b_k$ and $b_{k-1}$ and therefore modifies the matrix $B$.

In a step S509, the receiver device 120 updates the result of the Gram-Schmidt orthogonalization process according to the modified matrix $B$. Then the step S510 is performed.

In the step S510, the receiver device 120 increments the parameter $k$ by one unit, and then the step S505 is repeated.

Therefore, by implementing the algorithm of Fig. 5B, the effective LLL lattice reduction is performed. As, according to the step S304 or S405, a basis that depends on the result of a lattice reduction for another time and/or frequency resource is input in the algorithm of Fig. 5B, the pre-processing performed by the receiver device 120 terminates in a shorter time period compared to performing the effective LLL lattice reduction from scratch. Contrary to the algorithm of Fig. 5A, there is no size reduction of the columns $b_k$ against $b_p$ for $0 < p < k - 1$, which saves a lot of processing resources, while still providing a pre-processing with good performance of the complex symbols decoding process. For example, when applying SIC on a triangularized version of the matrix resulting from the lattice reduction, the algorithms of Fig. 5A and Fig. 5B bring equivalent performance.

**Fig. 6** schematically represents a third algorithm, performed by the receiver device 120, for performing the lattice reduction. The algorithm of Fig. 6 is an alternative to the algorithms of Figs. 5A and 5B, which simplifies the LLL lattice reduction.

In a step S601, the receiver device 120 initialises a parameter k with the value "2".

In a step S602, the receiver device 120 applies the Gram-Schmidt orthogonalization process to a matrix $B = [b_1,..,b_n]$ provided as input to the algorithm of Fig. 6. Applying the Gram-Schmidt orthogonalization process to the matrix $B$, wherein $n = N_t$, leads in defining the aforementioned matrix $B = [\hat{b}_1,..,\hat{b}_n]$ and the aforementioned lower triangular matrix $\mu$ with unit diagonal elements.

In a step S603, the receiver device 120 checks whether the parameter $k$ is greater than $N_t$, which is the quantity of the transmitting antennas 115. When the parameter $k$ is greater than $N_t$, the algorithm ends in a step S604; otherwise, a step S605 is performed.

In the step S605, the receiver device 120 size-reduces the column $b_k$ against the column $b_{k-1}$ of the matrix $B$.

To size-reduce the column $b_k$ against the column $b_{k-1}$, the receiver device 120 proceeds as already detailed with regard to Fig. 5A.

In a step S606, the receiver device 120 checks whether the Lovasz condition is met. When the Lovasz condition is met, a step S609 is performed; otherwise, a step S607 is performed.

In the step S607, the receiver device 120 swaps the columns $b_k$ and $b_{k-1}$ and therefore modifies the matrix $B$.

In a step S608, the receiver device 120 updates the result of the Gram-Schmidt orthogonalization process according to the modified matrix B. Then the step S609 is performed.

In the step S609, the receiver device 120 increments the parameter $k$ by one unit, and then the step S603 is repeated.

Therefore, by implementing the algorithm of Fig. 6, a simplified LLL lattice reduction is performed. Contrary to the algorithm of Fig. 5B, the algorithm of Fig. 6 does not run until no more swap is possible. The matrix input to the algorithm of Fig. 6 is then parsed only once, which may lead to a resulting basis that could be further reduced but that is sufficiently reduced for reaching good performance of the complex symbols decoding process, when the matrix input to the algorithm of Fig. 6 is already almost reduced. Thus, initializing the input of the algorithm with the result obtained for another time and/or frequency resource results in a well reduced matrix, even though the matrix input to the algorithm of Fig. 6 is then parsed only once.

**Fig. 7** schematically represents a fourth algorithm, performed by the receiver device 120, for performing the lattice reduction. The algorithm of Fig. 7 is an alternative to the algorithms of Figs. 5A, 5B and 6.

In a step S701, the receiver device 120 obtains a selection of at least one value of a parameter $k$, wherein any selected value of the parameter $k$ is an integer greater than "2".

In a step S702, the receiver device 120 applies the Gram-Schmidt orthogonalization process to a matrix $B = [b_1,..,b_n]$ provided as input to the algorithm of Fig. 7. Applying the Gram-Schmidt orthogonalization process to the matrix $B$, wherein $n = N_t$, leads in defining the aforementioned matrix $\hat{B} = [\hat{b}_1,..,\hat{b}_n]$ and the aforementioned lower triangular matrix $\mu$ with unit diagonal elements.

In a step S703, the receiver device 120 checks whether at least one value of the parameter k among said selection remains unprocessed. When at least one value of the parameter $k$ among said selection remains unprocessed, a step S705 is performed; otherwise, the algorithm ends in a step S704.

In the step S705, the receiver device 120 picks one unprocessed value among the selection of said at least one value of the parameter $k$.

In a step S706, the receiver device 120 size-reduces the column $b_k$ against the column $b_{k-1}$ of the matrix $B$.

To size-reduce the column $b_k$ against the column $b_{k-1}$, the receiver device 120 proceeds as already detailed with regard to Fig. 5A.

In a step S707, the receiver device 120 checks whether the Lovasz condition is met. When the Lovasz condition is met, the step S703 is repeated; otherwise, a step S708 is performed.

In the step S708, the receiver device 120 swaps the columns $b_k$ and $b_{k-1}$ and therefore modifies the matrix $B$.

In a step S709, the receiver device 120 updates the result of the Gram-Schmidt orthogonalization process according to the modified matrix B. Then the step S703 is repeated.

Therefore, by implementing the algorithm of Fig. 7, a simplified LLL lattice reduction is performed. Contrary to the algorithm of Fig. 5B, the algorithm of Fig. 7 does not run until no more swap is possible. The matrix input to the algorithm of Fig. 7 is then partly parsed only once, which may lead to a resulting basis that could be further reduced but that is sufficiently reduced for reaching good performance of the complex symbols decoding process. As a result, when the selection encompasses all possible values of the parameter $k$ for each time and/or frequency resource over $N_t$ occurrences in a row of the algorithm of Fig. 7, the performance of SIC on a triangularized version of the matrix resulting from the lattice reduction is optimal.

When implementing the algorithm of Fig. 7 for successive lattice reductions relating to plural respective time and/or frequency resources, the receiver device 120 may distribute the possible values that can take the parameter $k$ over said successive lattice reductions.

In one embodiment, when the selection obtained in the step S701 consists of one value, the parameter $k$ is defined as follows:

$$k = mod(l - 2, N_t - 1) + 2$$

wherein $l$ is an index representing the considered time and/or frequency resource, *e.g.* an index representing the subcarriers and *mod* is the modulus operation. This allows evenly distributing the possible values of the parameter $k$ over the time and/or frequency resource to be processed, *e.g.* over the subcarriers to be processed.

In another embodiment, when the selection obtained in the step S701 consists of plural values, the parameter $k$ is defined as follows:

$$1 < k \leq mod(l - 2, N_t - M) + 1 + M$$

wherein $l$ is an index representing the considered time and/or frequency resource, *e.g.* an index representing the subcarriers, and $M$ is an integer representing a processing depth for each time and/or frequency resource. The integer $M$ is for instance empirically defined. Thus, for each new time and/or frequency resource, at least the first two basis vectors are reduced once with each other, which is a key factor of performance.

The cardinality of each selection, and even the values contained in each selection, may be empirically defined and/or according to the flat fading channel properties, such as the time and/or frequency correlation between the time and/or frequency resources.

## Claims

1.   A method for performing lattice reduction for a receiver device receiving complex symbols from at least one transmitter device comprising together a plurality of $N_t$ transmitting antennas via a multiple-input multiple-output flat fading channel, wherein the receiver device performs:

- obtaining (S301) a first channel matrix representing the multiple-input multiple-output channel between the at least one transmitter device and the receiver device for a first time and/or frequency resource;
- obtaining (S302) a result of a first lattice reduction for the first channel matrix;
- obtaining (S303) a second channel matrix representing the multiple-input multiple-output channel between the at least one transmitter device and the receiver device for a second time and/or frequency resource; and
- performing (S304) a second lattice reduction for the second channel matrix, on the basis of the second channel matrix, of the first channel matrix and of the result of the first lattice reduction, the second lattice reduction being achieved by performing the lattice reduction on an input matrix resulting from the following matrix product:

$$H_2 T_1^{-1} \text{ with } T_1^{-1} = (H_1^* H_1)^{-1} H_1^* R_1$$

wherein $H_1$ represents the first channel matrix, $H_2$ represents the second channel matrix, $H_1^*$ represents the transpose complex conjugate of $H_1$ and $R_1$ represents the result of the first lattice reduction,

performing the lattice reduction consists in:

- applying the Gram-Schmidt orthogonalization process to the input matrix;
- obtaining a selection of at least one value, greater than 2, among column indexes of the input matrix;

and performing at least one iteration of the following steps:

- picking one value $k$ among said selection;
- size-reducing a first column of said input matrix with an index identified by $k$ against a second column of said input matrix with an index identified by $k$-1;
- swapping the first column and the second column and updating accordingly the Gram-Schmidt orthogonalization

EP 2 763 327 B1

process, when the Lovasz condition is not met;

and terminating the lattice reduction when all values of said selection have been picked, **characterized in that**, when performing successive lattice reductions relating to plural respective time and/or frequency resources, the receiver device distributes the possible values that can take the parameter k over said successive lattice reductions.

2. The method according to claim 1, **characterized in that**, the receiver device receiving the complex symbols via orthogonal frequency division multiplex transmissions, the first channel matrix represents the multiple-input multiple-output channel for a first subcarrier and the second channel matrix represents the multiple-input multiple-output channel for a second subcarrier.

3. The method according to any one of claims 1 and 2, **characterized in that**, a sequence of time and/or frequency resources being defined, the receiver device obtains the first channel matrix for the first time and/or frequency resource in sequence and further performs, for each other time and/or frequency resources:

- obtaining the second channel matrix;
- performing the second lattice reduction for the second channel matrix, on the basis of the second channel matrix and of the result of a lattice reduction performed for a channel matrix representing the multiple-input multiple-output channel between the at least one transmitter device and the receiver device for a preceding time and/or frequency resource in sequence.

4. The method according to any one of claims 1 and 2, **characterized in that**, a sequence of time and/or frequency resources being defined, the receiver device obtains the first channel matrix for the first time and/or frequency resource in sequence and further performs, for at least one other time and/or frequency resource:

- obtaining the second channel matrix;
- performing the second lattice reduction for the second channel matrix, on the basis of the second channel matrix and of the result of a lattice reduction performed for a channel matrix representing the multiple-input multiple-output channel between the at least one transmitter device and the receiver device for a preceding time and/or frequency resource in sequence,

and **in that** the receiver device further performs, for each yet other time and/or frequency resources:

- using the result of the lattice reduction performed or obtained for the channel matrix representing the multiple-input multiple-output channel between the at least one transmitter device and the receiver device for the closest time and/or frequency resource.

5. The method according to claim 1, **characterized in that**, the at least one transmitter device comprising together a plurality of $N_t$ transmitting antennas, performing the lattice reduction consists in:

- applying the Gram-Schmidt orthogonalization process to the input matrix;
- initializing an integer parameter *k* at the value 2;

and performing iterations of the following steps:

- size-reducing a first column of said input matrix with an index identified by *k* against a second column of said input matrix with an index identified by *k*-1;
- swapping the first column and the second column and updating accordingly the Gram-Schmidt orthogonalization process, when the Lovasz condition is not met;
- incrementing the integer parameter *k* by one unit;

and terminating the lattice reduction when the integer parameter *k* becomes greater than the number $N_t$ of transmitting antennas.

6. The method according to claim 1, **characterized in that**, when the obtained selection consists of one integer value, the parameter *k* is defined as follows:

$$k = mod(l - 2, N_t - 1) + 2$$

wherein $l$ is an index representing the time and/or frequency resources.

**7.** The method according to claim 1, **characterized in that**, when the obtained selection consists of plural integer values, the parameter $k$ is defined as follows:

$$1 < k \leq mod(l - 2, N_t - M) + 1 + M$$

wherein $l$ is an index representing the time and/or frequency resources and $M$ represents a processing depth for each time and/or frequency resource.

**8.** The method according to claim 1, **characterized in that**, the at least one transmitter device comprising together a plurality of $N_t$ transmitting antennas, performing the lattice reduction consists in:

- applying the Gram-Schmidt orthogonalization process to the input matrix;
- performing the following first set of iterations:

- initializing an integer parameter $k$ at the value 2;
- performing the following second set of iterations:

- size-reducing a first column of said input matrix with an index identified by $k$ against a second column of said input matrix with an index identified by $k$-1;
- swapping the first column and the second column and updating accordingly the Gram-Schmidt orthogonalization process, when the Lovasz condition is not met;
- incrementing the integer parameter $k$ by one unit; and

- terminating the second set of iterations when the integer parameter $k$ becomes greater than the number $N_t$ of transmitting antennas;

and terminating the lattice reduction when no swapping operation has been performed in the preceding occurrence of the second set of iterations.

**9.** A device for performing lattice reduction for a receiver device adapted to receive complex symbols from at least one transmitter device comprising together a plurality of $N_t$ transmitting antennas via a multiple-input multiple-output flat fading channel, wherein said device for performing lattice reduction is included in the receiver device and comprises:

- means for obtaining a first channel matrix representing the multiple-input multiple-output channel between the at least one transmitter device and the receiver device for a first time and/or frequency resource;
- means for obtaining a result of a first lattice reduction for the first channel matrix;
- means for obtaining a second channel matrix representing the multiple-input multiple-output channel between the at least one transmitter device and the receiver device for a second time and/or frequency resource; and
- means for performing a second lattice reduction for the second channel matrix, on the basis of the second channel matrix, of the first channel matrix and of the result of the first lattice reduction, the second lattice reduction being achieved by performing the lattice reduction on an input matrix resulting from the following matrix product:

$$H_2 T_1^{-1} \text{ with } T_1^{-1} = (H_1^* H_1)^{-1} H_1^* R_1$$

wherein $H_1$ represents the first channel matrix, $H_2$ represents the second channel matrix, $H_1^*$ represents the transpose complex conjugate of $H_1$ and $R_1$ represents the result of the first lattice reduction,

performing the lattice reduction consists in:

- applying the Gram-Schmidt orthogonalization process to the input matrix;

- obtaining a selection of at least one value, greater than 2, among column indexes of the input matrix;

and performing at least one iteration of the following steps:

- picking one value $k$ among said selection;
- size-reducing a first column of said input matrix with an index identified by $k$ against a second column of said input matrix with an index identified by $k$-1;
- swapping the first column and the second column and updating accordingly the Gram-Schmidt orthogonalization process, when the Lovasz condition is not met;

and terminating the lattice reduction when all values of said selection have been picked, **characterized in that**, when performing successive lattice reductions relating to plural respective time and/or frequency resources, the receiver device distributes the possible values that can take the parameter $k$ over said successive lattice reductions.

10. A computer program **characterized in that** it comprises program code instructions which can be loaded in a programmable device for implementing the method according to any one of claims 1 to 8, when the program code instructions are run by the programmable device.

11. Information storage means, **characterized in that** they store a computer program comprising program code instructions which can be loaded in a programmable device for implementing the method according to any one of claims 1 to 8, when the program code instructions are run by the programmable device.

**Patentansprüche**

1. Verfahren zum Ausführen einer Gitterreduktion für eine Empfangsvorrichtung, die komplexe Symbole von mindestens einer Sendevorrichtung, die zusammen mehrere $N_t$-Sendeantennen umfasst, über einen Mehrfacheingangs-Mehrfachausgangs-Kanal mit Flachschwund empfängt, wobei die Empfangsvorrichtung Folgendes ausführt:

- Erhalten (S301) einer ersten Kanalmatrix, die den Mehrfacheingangs-Mehrfachausgangs-Kanal zwischen der mindestens eine Sendevorrichtung und der Empfangsvorrichtung für eine erste Zeit- und/oder Frequenzressource repräsentiert;
- Erhalten (S302) eines Ergebnisses einer ersten Gitterreduktion für die erste Kanalmatrix;
- Erhalten (S303) einer zweiten Kanalmatrix, die den Mehrfacheingangs-Mehrfachausgangs-Kanal zwischen der mindestens einen Sendevorrichtung und der Empfangsvorrichtung für eine zweite Zeit- und/oder Frequenzressource repräsentiert; und
- Ausführen (S304) einer zweiten Gitterreduktion für die zweite Kanalmatrix, auf der Basis der zweiten Kanalmatrix, der ersten Kanalmatrix und des Ergebnisses der ersten Gitterreduktion, wobei die zweite Gitterreduktion durch Ausführungen der Gitterreduktion an einer Eingangsmatrix erreicht wird, die aus dem folgenden Matrixprodukt resultiert:

$$\mathtt{H_2 T_1^{-1} \ mit \ T_1^{-1} \ = \ (H_1{}^* \ H_1)^{-1} \ H_1{}^* \ R_1}$$

wobei $H_1$ die erste Kanalmatrix repräsentiert, $H_2$ die zweite Kanalmatrix repräsentiert, $H_1{}^*$ die transponierte komplexe Konjugierte von $H_1$ repräsentiert, und $R_1$ das Ergebnis der ersten Gitterreduktion repräsentiert,

wobei das Ausführen der Gitterreduktion besteht aus:

- Anwenden des Gram-Schmidt-Orthogonalisierungsprozesses auf die Eingangsmatrix;
- Erhalten einer Auswahl von mindestens einem Wert, der größer als 2 ist, unter den Spaltenindizes der Eingangsmatrix;

und Ausführen von mindestens einer Iteration der folgenden Schritte:

- Auswählen von einem Wert k aus der Auswahl;
- Größenreduzierung einer ersten Spalte der Eingangsmatrix mit einem Index, der durch k identifiziert wird, gegen eine zweite Spalte der Eingangsmatrix mit einem Index, der durch k-1 identifiziert ist;
- Tauschen der ersten Spalte und der zweiten Spalte und entsprechendes Aktualisieren des Gram-Schmidt-Orthogonalisierungsprozesses, wenn die Lovasz-Bedingung nicht erfüllt ist;

und Beenden der Gitterreduktion, wenn alle Werte der Auswahl gewählt worden sind,
**dadurch gekennzeichnet, dass** beim Ausführen von aufeinanderfolgenden Gitterreduktionen, die sich auf mehrere jeweilige Zeit- und/oder Frequenzressourcen beziehen, die Empfangsvorrichtung die möglichen Werte verteilt, die den Parameter k über die aufeinanderfolgenden Gitterreduktionen annehmen können.

2. Verfahren nach Anspruch 1, **dadurch gekennzeichnet, dass** die Empfangsvorrichtung die komplexen Symbole über orthogonale Frequenzteilungs-Multiplexübertragungen empfängt, die erste Kanalmatrix den Mehrfacheingangs-Mehrfachausgangs-Kanal für einen ersten Unterträger repräsentiert, und die zweite Kanalmatrix den Mehrfacheingangs-Mehrfachausgangs-Kanal für einen zweiten Unterträger repräsentiert.

3. Verfahren nach einem der Ansprüche 1 und 2, **dadurch gekennzeichnet, dass** eine Sequenz von Zeit- und/oder Frequenzressourcen definiert wird, die Empfangsvorrichtung die erste Kanalmatrix für die erste Zeit- und/oder Frequenzressource in Folge erhält und ferner für alle anderen Zeit- und/oder Frequenzressourcen Folgendes ausführt:

- Erhalten der zweiten Kanalmatrix;
- Ausführen der zweiten Gitterreduktion für die zweite Kanalmatrix, auf der Basis der zweiten Kanalmatrix und des Ergebnisses einer Gitterreduktion, die für eine Kanalmatrix ausgeführt wird, welche den Mehrfacheingangs-Mehrfachausgangs-Kanal zwischen der mindestens einen Sendevorrichtung und der Empfangsvorrichtung für eine vorhergehende Zeit- und/oder Frequenzressource in Folge repräsentiert.

4. Verfahren nach einem der Ansprüche 1 und 2, **dadurch gekennzeichnet, dass** eine Sequenz von Zeit- und/oder Frequenzressourcen definiert wird, die Empfangsvorrichtung die erste Kanalmatrix für die erste Zeit- und/oder Frequenzressource in Folge erhält und ferner für mindestens eine andere Zeit- und/oder Frequenzressource Folgendes ausführt:

- Erhalten der zweiten Kanalmatrix;
- Ausführen der zweiten Gitterreduktion für die zweite Kanalmatrix, auf der Basis der zweiten Kanalmatrix und des Ergebnisses einer Gitterreduktion, die für eine Kanalmatrix ausgeführt wird, welche den Mehrfacheingangs-Mehrfachausgangs-Kanal zwischen der mindestens einen Sendevorrichtung und der Empfangsvorrichtung für eine vorhergehende Zeit- und/oder Frequenzressource in Folge repräsentiert,

und dadurch, dass die Empfangsvorrichtung ferner für jede noch andere Zeit- und/oder Frequenzressourcen Folgendes ausführt:

- Verwenden des Ergebnisses der Gitterreduktion, die für die Kanalmatrix ausgeführt oder erhalten wurde, die den Mehrfacheingangs-Mehrfachausgangs-Kanal zwischen der mindestens einen Sendevorrichtung und der Empfangsvorrichtung für die nächste Zeit- und/oder Frequenzressourcen repräsentiert.

5. Verfahren nach Anspruch 1, **dadurch gekennzeichnet, dass** die mindestens eine Sendevorrichtung zusammen mehrere $N_t$-Sendeantennen umfasst,
wobei das Ausführen der Gitterreduktion besteht aus:

- Anwenden des Gram-Schmidt-Orthogonalisierungsprozesses auf die Eingangsmatrix;
- Initialisieren eines ganzzahligen Parameters k beim Wert 2;

und Ausführen von Iterationen der folgenden Schritte:

- Größenreduzierung einer ersten Spalte der Eingangsmatrix mit einem Index, der durch k identifiziert wird, gegen eine zweite Spalte der Eingangsmatrix mit einem Index, der durch $k-1$ identifiziert ist;
- Tauschen der ersten Spalte und der zweiten Spalte und entsprechendes Aktualisieren des Gram-Schmidt-Orthogonalisierungsprozesses, wenn die Lovasz-Bedingung nicht erfüllt ist;
- Erhöhen des ganzzahligen Parameters k um eine Einheit;

und Beenden der Gitterreduktion, wenn der ganzzahlige Parameter k größer als die Zahl $N_t$ der Sendeantennen wird.

6. Verfahren nach Anspruch 1, **dadurch gekennzeichnet, dass**, wenn die erhaltene Auswahl aus einem ganzzahligen Wert besteht, der Parameter k folgendermaßen definiert ist:

$$k = mod(l - 2, N_t - 1) + 2$$

wobei *l* ein Index ist, der die Zeit- und/oder Frequenzressourcen repräsentiert.

7. Verfahren nach Anspruch 1, **dadurch gekennzeichnet, dass** wenn die erhaltene Auswahl aus mehreren ganzzahligen Werten besteht, der Parameter *k* folgendermaßen definiert ist:

$$1 < k \leq mod(l - 2, N_t - M) + 1 + M$$

wobei 1 ein Index ist, der die Zeit- und/oder Frequenzressourcen repräsentiert, und M eine Verarbeitungstiefe für jede Zeit- und/oder Frequenzressource repräsentiert.

8. Verfahren nach Anspruch 1, **dadurch gekennzeichnet, dass** die mindestens eine Sendevorrichtung zusammen mehrere $N_t$-Sendeantennen umfasst, wobei das Ausführen der Gitterreduktion besteht aus:

- Anwenden des Gram-Schmidt-Orthogonalisierungsprozesses auf die Eingangsmatrix;
- Ausführen des folgenden ersten Satzes von Iterationen:

 - Initialisieren eines ganzzahligen Parameters *k* beim Wert 2;
 - Ausführen des folgenden zweiten Satzes von Iterationen:

  - Größenreduzierung einer ersten Spalte der Eingangsmatrix mit einem Index, der durch *k* identifiziert wird, gegen eine zweite Spalte der Eingangsmatrix mit einem Index, der durch *k*-1 identifiziert ist;
  - Tauschen der ersten Spalte und der zweiten Spalte und entsprechendes Aktualisieren des Gram-Schmidt-Orthogonalisierungsprozesses, wenn die Lovasz-Bedingung nicht erfüllt ist;
  - Erhöhen des ganzzahligen Parameters *k* um eine Einheit; und
  - Beenden des zweiten Satzes von Iterationen, wenn der ganzzahlige Parameter *k* größer als die Zahl $N_t$ der Sendeantennen wird;

und Beenden der Gitterreduktion, wenn keine Tauschoperation bei dem vorhergehenden Auftreten des zweiten Satzes von Iterationen ausgeführt wurde.

9. Vorrichtung zum Ausführen der Gitterreduktion für eine Empfangsvorrichtung, die zum Empfangen von komplexen Symbolen von mindestens einer Sendevorrichtung ausgelegt ist, die zusammen mehrere $N_t$-Sendeantennen umfasst, über einen Mehrfacheingangs-Mehrfachausgangs-Kanal mit Flachschwund, wobei die Vorrichtung zum Ausführen der Gitterreduktion in der Empfangsvorrichtung enthalten ist und Folgendes umfasst:

- Mittel zum Erhalten einer ersten Kanalmatrix, die den Mehrfacheingangs-Mehrfachausgangs-Kanal zwischen der mindestens einen Sendevorrichtung und der Empfangsvorrichtung für eine erste Zeit- und/oder Frequenzressource repräsentiert;
- Mittel zum Erhalten eines Ergebnisses einer ersten Gitterreduktion für die erste Kanalmatrix;
- Mittel zum Erhalten einer zweiten Kanalmatrix, die den Mehrfacheingangs-Mehrfachausgangs-Kanal zwischen der mindestens einen Sendevorrichtung und der Empfangsvorrichtung für eine zweite Zeit- und/oder Frequenzressource repräsentiert; und
- Mittel zum Ausführen einer zweiten Gitterreduktion für die zweite Kanalmatrix, auf der Basis der zweiten Kanalmatrix, der ersten Kanalmatrix und des Ergebnisses der ersten Gitterreduktion, wobei die zweite Gitterreduktion durch Ausführen der Gitterreduktion an einer Eingangsmatrix erreicht wird, die aus dem folgenden Matrixprodukt resultiert:

$$H_2 T_1^{-1} \text{ mit } T_1^{-1} = (H_1^* H_1)^{-1} H_1^* R_1$$

wobei $H_1$ die erste Kanalmatrix repräsentiert, $H_2$ die zweite Kanalmatrix repräsentiert, $H_1{}^*$ die transponierte komplexe Konjugierte von $H_1$ repräsentiert, und $R_1$ das Ergebnis der ersten Gitterreduktion repräsentiert,

wobei das Ausführen der Gitterreduktion besteht aus:

- Anwenden des Gram-Schmidt-Orthogonalisierungsprozesses auf die Eingangsmatrix;
- Erhalten einer Auswahl von mindestens einem Wert, der größer als 2 ist, unter den Spaltenindizes der Eingangsmatrix;

und Ausführen von mindestens einer Iteration der folgenden Schritte:

- Auswählen von einem Wert $k$ aus der Auswahl;
- Größenreduzierung einer ersten Spalte der Eingangsmatrix mit einem Index, der durch $k$ identifiziert wird, gegen eine zweite Spalte der Eingangsmatrix mit einem Index, der durch $k$-1 identifiziert ist;
- Tauschen der ersten Spalte und der zweiten Spalte und entsprechendes Aktualisieren des Gram-Schmidt-Orthogonalisierungsprozesses, wenn die Lovasz-Bedingung nicht erfüllt ist;

und Beenden der Gitterreduktion, wenn alle Werte der Auswahl gewählt worden sind, **dadurch gekennzeichnet, dass** beim Ausführen von aufeinanderfolgenden Gitterreduktionen, die sich auf mehrere jeweilige Zeit- und/oder Frequenzressourcen beziehen, die Empfangsvorrichtung die möglichen Werte verteilt, die den Parameter $k$ über die aufeinanderfolgenden Gitterreduktionen annehmen können.

**10.** Computerprogramm, **dadurch gekennzeichnet, dass** es Programmcodeanweisungen umfasst, die in eine programmierbare Vorrichtung zum Implementieren des Verfahrens nach einem der Ansprüche 1 bis 8 geladen werden können, wenn die Programmcodeanweisungen von der programmierbaren Vorrichtung ausgeführt werden.

**11.** Informationsspeichermittel, **dadurch gekennzeichnet, dass** sie ein Computerprogramm speichern, das Programmcodeanweisungen umfasst, die in eine programmierbare Vorrichtung zum Implementieren des Verfahrens nach einem der Ansprüche 1 bis 8 geladen werden können, wenn die Programmcodeanweisungen von der programmierbaren Vorrichtung ausgeführt werden.

**Revendications**

**1.** Un procédé pour effectuer une réduction de Lattice pour un dispositif récepteur recevant des symboles complexes d'au moins un dispositif émetteur comprenant ensemble une pluralité d'antennes d'émission $N_t$ via un canal d'évanouissement plat à entrées multiples et à sorties multiples, dans lequel le dispositif récepteur effectue :

- l'obtention (S301) d'une première matrice de canal représentant le canal à entrées multiples et à sorties multiples entre le au moins un dispositif émetteur et le dispositif récepteur pour une première ressource de temps et/ou de fréquence ;
- l'obtention (S302) d'un résultat d'une première réduction de Lattice pour la première matrice de canal ;
- l'obtention (S303) d'une seconde matrice de canal représentant le canal à entrées multiples et à sorties multiples entre le au moins un dispositif émetteur et le dispositif récepteur pour une seconde ressource de temps et/ou de fréquence ; et
- l'exécution (S304) d'une seconde réduction de Lattice pour la seconde matrice de canal, à partir de la seconde matrice de canal, de la première matrice de canal et du résultat de la première réduction de Lattice, la seconde réduction de Lattice étant réalisée en exécutant la réduction de Lattice sur une matrice d'entrée résultant du produit matriciel suivant :

$$H_2 T_1{}^{-1} \text{ with } T_1{}^{-1} = (H_1{}^* H_1)^{-1} H_1{}^* R_1$$

où $H_1$ représente la première matrice de canal, $H_2$ représente la seconde matrice de canal, $H_1{}^*$ représente le conjugué complexe transposé de $H_1$ et $R_1$ représente le résultat de la première réduction de Lattice,

l'exécution de la réduction de Lattice consiste à :

- appliquer le processus d'orthogonalisation de Gram-Schmidt à la matrice d'entrée ;
- obtenir une sélection d'au moins une valeur, supérieure à 2, parmi les index de colonne de la matrice d'entrée ;

et effectuer au moins une itération des étapes suivantes :

- choisir une valeur k parmi ladite sélection;
- réduire en taille une première colonne de ladite matrice d'entrée avec un indice identifié par k contre une seconde colonne de ladite matrice d'entrée avec un indice identifié par k-1 ;
- permuter la première colonne et la seconde colonne et mettre à jour en conséquence le processus d'orthogonalisation de Gram-Schmidt, lorsque la condition de Lovasz n'est pas remplie ;

et terminer la réduction de Lattice lorsque toutes les valeurs de ladite sélection ont été choisies, **caractérisé en ce que**, lors de l'exécution des réductions de Lattice successives relatives à plusieurs ressources temporelles et/ou fréquentielles respectives, le dispositif de réception distribue les valeurs possibles que peut prendre le paramètre k sur lesdites réductions de Lattice successives.

2. Le procédé selon la revendication 1, **caractérisé en ce que** le dispositif récepteur recevant les symboles complexes par l'intermédiaire de transmissions multiplexes par répartition de fréquences orthogonales, la première matrice de canal représente le canal à entrées multiples et à sorties multiples pour une première sous-porteuse et la seconde matrice de canal représente le canal à entrées multiples et à sorties multiples pour une seconde sous-porteuse.

3. Le procédé selon l'une quelconque des revendications 1 et 2, **caractérisé en ce qu'**une séquence de ressources de temps et/ou de fréquence étant définie, le dispositif récepteur obtient la première matrice de canal pour la première ressource de temps et/ou de fréquence en séquence et effectue en outre, pour chaque autre ressource de temps et/ de fréquence:

- l'obtention de la seconde matrice de canal ;
- l'exécution de la seconde réduction de Lattice pour la seconde matrice de, sur la base de la seconde matrice de canal et du résultat d'une réduction de Lattice effectuée pour une matrice de canal représentant le canal à entrées multiples et à sorties multiples entre le au moins un dispositif émetteur et le dispositif récepteur pour une ressource de temps et/ou de fréquence précédente en séquence.

4. Le procédé selon l'une quelconque des revendications 1 et 2, **caractérisé en ce que**, une séquence de ressources de temps et/ou de fréquence étant définie, le dispositif récepteur obtient la première matrice de canal pour la première ressource de temps et/ou de fréquence en séquence et effectue en outre, pour au moins une autre ressource de temps et/ou de fréquence :

- l'obtention de la seconde matrice de canal ;
- l'exécution de la seconde réduction de Lattice pour la seconde matrice de canal, sur la base de la seconde matrice de canal et du résultat d'une réduction de Lattice effectuée pour une matrice de canal représentant le canal à entrées multiples et à sorties multiples entre le au moins un dispositif émetteur et le dispositif récepteur pour une ressource de temps et/ou de fréquence précédente en séquence,

et **en ce que** le dispositif de réception effectue en outre, pour chaque autre ressource de temps et/ou de fréquence :

- l'utilisation du résultat de la réduction de Lattice réalisée ou obtenue pour la matrice de canal représentant le canal à entrées multiples et à sorties multiples entre le au moins un dispositif émetteur et le dispositif récepteur pour la ressource de temps et/ou de fréquence la plus proche.

5. Le procédé selon la revendication 1, **caractérisé en ce que** le au moins un dispositif émetteur comprenant ensemble une pluralité d'antennes d'émission $N_t$, l'exécution de la réduction de réseau consiste à :

- appliquer le processus d'orthogonalisation de Gram-Schmidt à la matrice d'entrée ;
- initialiser un paramètre entier k à la valeur 2 ;

et effectuer des itérations des étapes suivantes :

- réduire en taille une première colonne de ladite matrice d'entrée avec un indice identifié par k contre une deuxième colonne de ladite matrice d'entrée avec un indice identifié par k-1;
- permuter la première colonne et la deuxième colonne et mettre à jour en conséquence le processus d'orthogonalisation de Gram-Schmidt, lorsque la condition de Lovasz n'est pas remplie ;
- incrémenter le paramètre entier k d'une unité ;

et terminer la réduction de Lattice lorsque le paramètre entier k devient supérieur au nombre $N_t$ d'antennes d'émission.

6. Le procédé selon la revendication 1, **caractérisé en ce que**, lorsque la sélection obtenue est constituée d'une valeur entière, le paramètre k est défini comme suit :

$$k = mod(l - 2, N_t - 1) + 2$$

où *l* est un indice représentant les ressources de temps et/ou de fréquence.

7. Le procédé selon la revendication 1, **caractérisé en ce que**, lorsque la sélection obtenue est constituée d'une valeur entière, le paramètre k est défini comme suit :

$$1 < k \leq mod(l - 2, N_t - M) + 1 + M$$

où *l* est un indice représentant les ressources de temps et/ou de fréquence et *M* représente une profondeur de traitement pour chaque ressource de temps et/ou de fréquence.

8. Le procédé selon la revendication 1, **caractérisé en ce que** le au moins un dispositif d'émission comprenant ensemble une pluralité d'antennes d'émission $N_t$, l'exécution de la réduction de réseau consiste à :

- appliquer le processus d'orthogonalisation de Gram-Schmidt à la matrice d'entrée ;
- effectuer le premier ensemble d'itérations suivant :

- initialiser un paramètre entier k à la valeur 2 ; (1 seule itération dans l'ensemble ??)
- effectuer le second ensemble d'itérations suivant :

- réduire en taille une première colonne de ladite matrice d'entrée avec un indice identifié par k contre une deuxième colonne de ladite matrice d'entrée avec un indice identifié par k-1;
- permuter la première colonne et la deuxième colonne et mettre à jour en conséquence le processus d'orthogonalisation de Gram-Schmidt, lorsque la condition de Lovasz n'est pas remplie ;
- incrémenter le paramètre entier k d'une unité ;
et
- terminer le second ensemble d'itérations lorsque le paramètre entier k devient supérieur au nombre $N_t$ d'antennes d'émission ;

et terminer la réduction de Lattice lorsqu'aucune opération de permutation n'a été effectuée dans l'occurrence précédent le second ensemble d'itérations.

9. Un dispositif pour effectuer une réduction de Lattice pour un dispositif récepteur recevant des symboles complexes d'au moins un dispositif émetteur comprenant ensemble une pluralité d'antennes d'émission $N_t$ via un canal d'évanouissement plat à entrées multiples et à sorties multiples, dans lequel le dispositif pour effectuer une réduction de Lattice est compris dans le récepteur et comporte :

- des moyens d'obtention d'une première matrice de canal représentant le canal à entrées multiples et à sorties multiples entre le au moins un dispositif émetteur et le dispositif récepteur pour une première ressource de temps et/ou de fréquence ;
- des moyens d'obtention d'un résultat d'une première réduction de Lattice pour la première matrice de canal ;
- des moyens d'obtention d'une seconde matrice de canal représentant le canal à entrées multiples et à sorties multiples entre le au moins un dispositif émetteur et le dispositif récepteur pour une seconde ressource de temps et/ou de fréquence ; et

- des moyens d'exécution d'une seconde réduction de Lattice pour la seconde matrice de canal, à partir de la seconde matrice de canal, de la première matrice de canal et du résultat de la première réduction de Lattice, la seconde réduction de Lattice étant réalisée en exécutant la réduction de Lattice sur une matrice d'entrée résultant du produit matriciel suivant :

$$H_2 T_1^{-1} \text{ with } T_1^{-1} = (H_1^* H_1)^{-1} H_1^* R_1$$

où $H_1$ représente la première matrice de canal, $H_2$ représente la seconde matrice de canal, $H_1^*$ représente le conjugué complexe transposé de $H_1$ et $R_1$ représente le résultat de la première réduction de Lattice,

l'exécution de la réduction de Lattice consiste à :

- appliquer le processus d'orthogonalisation de Gram-Schmidt à la matrice d'entrée;
- obtenir une sélection d'au moins une valeur, supérieure à 2, parmi les index de colonne de la matrice d'entrée;

et effectuer au moins une itération des étapes suivantes :

- choisir une valeur k parmi ladite sélection ;
- réduire en taille une première colonne de ladite matrice d'entrée avec un indice identifié par k contre une seconde colonne de ladite matrice d'entrée avec un indice identifié par $k$-1;
- permuter la première colonne et la seconde colonne et mettre à jour en conséquence le processus d'orthogonalisation de Gram-Schmidt, lorsque la condition de Lovasz n'est pas remplie ;

et terminer la réduction de Lattice lorsque toutes les valeurs de ladite sélection ont été choisies, **caractérisé en ce que**, lors de l'exécution des réductions de Lattice successives relatives à plusieurs ressources temporelles et/ou fréquentielles respectives, le dispositif de réception distribue les valeurs possibles que peut prendre le paramètre k sur lesdites réductions de Lattice successives.

10. Un programme d'ordinateur **caractérisé en ce qu'**il comprend des instructions de code de programme qui peuvent être chargées dans un dispositif programmable pour mettre en oeuvre le procédé selon l'une quelconque des revendications 1 à 8, lorsque les instructions de code de programme sont exécutées par le dispositif programmable.

11. Un dispositif de stockage d'informations, **caractérisé en ce qu'**il mémorise un programme d'ordinateur comprenant des instructions de code de programme pouvant être chargées dans un dispositif programmable de mise en oeuvre du procédé selon l'une quelconque des revendications 1 à 8, lorsque les instructions de code de programme sont programmées dispositif.

Fig. 1A

Fig. 1B

Fig. 2

Fig. 3

Fig. 4

S551 — k=2

S552 — Applying the Gram–Schmidt process

S553 — k > $N_t$ ?

no / yes

End — S554

Size-reducing $b_k$ against $b_{k-1}$ — S555

Lovasz condition met? — S556

no / yes

S560 — p=k-2

S564 — k++

Swapping $b_k$ and $b_{k-1}$ — S557

p = 0 ? — S561

no / yes

Updating the Gram–Schmidt process — S558

Size-reducing $b_k$ against $b_p$ — S562

k = max (k-1,2) — S559

p - - — S563

Fig. 5A

S501 — Applying the Gram–Schmidt process

improvement possible? — S502

yes

no

S504 — k=2

End — S503

no ← k > $N_t$ ? → yes — S505

Size-reducing $b_k$ against $b_{k-1}$ — S506

no ← Lovasz condition met? → yes — S507

Swapping $b_k$ and $b_{k-1}$ — S508

Updating the Gram–Schmidt process — S509

k++ — S510

Fig. 5B

Fig. 6

Obtaining a selection of at least one value $k$ ⟿ S701

Applying the Gram–Schmidt process ⟿ S702

yes — Remaining $k$? — no
S705 — S703 — S704

Selecting $k$

End

Size-reducing $b_k$ against $b_{k-1}$ ⟿ S706

no — Lovasz condition met? — yes
S707

Swapping $b_k$ and $b_{k-1}$ ⟿ S708

Updating the Gram–Schmidt process ⟿ S709

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012183088 A1

**Non-patent literature cited in the description**

- Effective LLL Reduction for Lattice Decoding. **CONG LING et al.** INFORMATION THEORY, 2007 - ISIT 2007 - IEEE INTERNATIONAL SYMPOSIUM. IEEE, 24 June 2007, 196-200